# EUROPÄISCHE PATENTSCHRIFT

(11) **EP 1 307 704 B1**
(45) Veröffentlichungstag und Bekanntmachung des Hinweises auf die Patenterteilung: **23.05.2018**
(21) Anmeldenummer: 01958039.8
(22) Anmeldetag: 31.07.2001
(51) Int. Cl.: G01C 15/00, G01S 11/12, G01S 1/70, G01S 5/16

(54) **MESSANORDNUNG UND MESSEMPFÄNGER ZUR ENTFERNUNGS- UND/ODER POSITIONSBESTIMMUNG**
MEASURING DEVICE AND RECEIVER FOR DETERMINING DISTANCE AND/OR POSITION
DISPOSITIF ET RÉCEPTEUR DE MESURE PERMETTANT DE DETERMINER UNE DISTANCE ET/OU UNE POSITION

(30) Priorität: 01.08.2000 DE 10037853; 29.11.2000 DE 10059240
(43) Veröffentlichungstag der Anmeldung: 07.05.2003
(60) Teilanmeldung: 10011986.6
(73) Patentinhaber: Trimble Inc., Sunnyvale CA 94085 (US)
(72) Erfinder: Essling, Mirko, 55606 Kellenbach (DE); Kasper, Michael, 67663 Kaiserslautern (DE); Jörg, Klaus-Werner, 67707 Schopp (DE)
(74) Vertreter: Hoffmann Eitle
(86) Internationale Anmeldenummer: PCT/EP2001/008841
(87) Internationale Veröffentlichungsnummer: WO 2002/010681

(56) Entgegenhaltungen:
- US-A- 2 830 487
- US-A- 3 687 556
- US-A- 4 268 167
- US-A- 4 818 107
- US-A- 5 218 582
- US-A- 5 742 394
- US-A- 6 066 846

## Beschreibung

Die vorliegende Erfindung betrifft die Oberbegriffe der unabhängigen Ansprüche. Damit befaßt sich die Erfindung allgemein mit der Bestimmung von Entfernungen und/oder Positionen.
Es ist häufig erforderlich, vergleichsweise kurze Entfernungen im Bereich einiger Zentimeter bis zu einigen hundert Metern schnell und hochpräzise vermessen zu können. Anwendungen hierfür sind beispielsweise das Ausmessen bestehender Immobilien, die Vermessung von Grundstücken, beim Aufbau von Häusern, genauso wie die Entfernungsmessung von beweglichen Maschinen, beispielsweise Transportsystemen in Industriehallen, deren Abstand von Wänden oder dergl. bestimmt werden muß, um die Bewegung gegebenenfalls vor Kollisionen anzuhalten. Darüber hinaus ist es oftmals nicht nur gewünscht, die Entfernung zu einem Referenzpunkt zu bestimmen, sondern auch eine relative Position zu diesem Bezugspunkt zu bestimmen, und zwar je nach Anwendung in zwei oder drei Dimensionen, d.h. typisch die Position auf einer Fläche bzw. zusätzlich noch die Höhe.

Es sind nun verschiedene Verfahren vorgeschlagen worden, um diesen Meßaufgaben gerecht zu werden.

So schlägt beispielsweise die US 5,949,530 ein Verfahren vor, bei welchem ein gepulster Laserstrahl ausgesandt und die Entfernung zu einem entfernten Objekt aus der Laufzeit des rückgestreuten Impulses bestimmt wird. Systeme dieser Art finden bereits industrielle Anwendung, sind allerdings teuer, da die Laufzeiten der Lichtpulse kurz sind und eine hochfrequent arbeitende Auswerteelektronik erforderlich ist, die dementsprechend schnell ansprechen muß.
Aus der US 5,742,394 ist ein System zur Bestimmung des Abstandes von einem festen Referenzpunkt und der Orientierung eines zumindest drei Lichtsensoren tragenden Objekts bekannt, wobei das Objekt durch zwei modulierte scannende Strahlen bekannter Winkelausrichtung und Rotationsfrequenz bestrahlt wird. Dabei soll mit einem Zeitgeberschaltkreis ein Zeitintervall bestimmt werden, das zwischen aufeinanderfolgenden Empfängen von jedem der Strahlen am Objekt liegt. Die Kenntnis dieses Zeitintervalls und der Relativpositionen der Strahlen erlaubt die Berechnung der räumlichen Koordinaten des Objektes.
Aus der US 4,268,167 ist ein System zur Messung des Abstandes zwischen einer Zentralanordnung und einer Anzahl entfernter Orte bekannt. Zwei parallele Strahlen sollen nach außen von einer Zentralstation ausgestrahlt werden, wobei die Strahlen sich mit bekannter Winkelgeschwindigkeit drehen. Die Zeit, die für jeden der zwei Strahlen erforderlich ist, um über einen bestimmten Punkt an einem entfernten Ort zu streichen, ist eine Funktion des Abstandes, welcher den entfernten Ort von dem Zentralort trennt, und diese Zeit kann bei dem entfernten Ort bestimmt werden, um den trennenden Abstand zu bestimmen.
Die US 6066846 beschreibt einen an ein Referenzgitter eines Lichtleiters angelegten Lichtstrahl zur Synchronisierung. Der Lichtstrahl tritt gepulst durch das Gitter hindurch und wird durch eine konvexe Oberfläche des Lichtleiters gesammelt. Das gesammelte Licht wird an der rückwärtigen Oberfläche des Lichtleiters reflektiert, gestreut und an Fotodioden an gegenüberliegenden Enden des Lichtleiters erfasst. Aus den erfassten Lichtsignalen wird ein Synchronisierungssignal erhalten.
Weiter sind Anordnungen bekannt, bei welchen auf Meßstrahlen Signale aufmoduliert werden und eine auf die Modulation bezogene Größe, z.B. die Phase, zur Bestimmung der Entfernung zum Meßsender herangezogen wird.
Neben der beschriebenen Laufzeitmessung und der Phasenmessung bei geeignet moduliertem Laserlicht sind weitere Verfahren wie die aktive Triangulation bekannt, bei denen z.B. rückgestreutes Laserlicht mit einem positionsempfindlichen Detektor (PSD) erfaßt wird, um aus der Position eines auf diesen Detektor abgebildeten Lichtpunktes auf die Entfernung zu den Objektpunkten zu schließen. Es sind weiter Anordnungen bekannt, bei welchen ein Lichtsender exakt zur Vertikalen ausgerichtet wird, um dann einen Lichtstrahl längs einer horizontalen Linie oder ein Koordinatenkreuz als Referenz zu emittieren. Hiermit können Messungen erleichtert werden, nicht jedoch ohne weiteres vorgenommen werden.
Die Aufgabe der vorliegenden Erfindung besteht darin, Neues für die gewerbliche Anwendung bereitzustellen.

Die erfindungsgemäße Lösung dieser Aufgabe wird in den unabhängigen Ansprüchen beansprucht, bevorzugte Ausführungsformen finden sich in den abhängigen Ansprüchen. In einem Beispiel wird vorgeschlagen, daß bei einer Messanordnung mit einem Messender und einem messbar beabstandeten Messempfänger vorgesehen ist, daß der Messender zur Emission von zumindest zwei derart in vorgegebener Beziehung zueinander eine Fläche überstreichende Messsendestrahlen und der Messempfänger zum zeitaufgelösten Empfang von Messstrahlen ausgebildet ist, daß aus der Zeitsignatur des Messstrahlenempfangs die Sender-Empfänger-Entfernung bestimmbar ist.

Ein erster wesentlicher Aspekt nutzt dabei, daß durch die vorgegebene Beziehung von zwei separaten Meßstrahlen zueinander, die in vorgegebener Weise über eine Fläche bewegt werden, am Meßempfänger eine Empfangs-Signatur erhalten wird, aus welcher auf die Entfernung zum Meßsender geschlossen werden kann.

Das dadurch realisierte Messprinzip läßt sich, ohne die Erfindung auf diesen speziellen Fall beschränkt zu sehen, am besten für zwei parallel zueinander emittierte Laserstrahlen verstehen, die zusammen gleichmäßig um eine Achse rotieren, wobei die Rotationsachse senkrecht auf die durch die Laserstrahlen definierte Ebene stehen soll.

Ein Laserstrahl benötigt durch die gleichmäßige Rotation zunächst in jeder Entfernung zur Rotationsachse stets dieselbe Zeit, um einmal ganz umzulaufen. Die Länge des Umfangskreises, den der Laser bei einem vollständigen Umlauf überstreicht, wächst jedoch einleuchtender Weise mit der Entfernung von der Rotationsachse.

Nun ist bei paralleler Emission der Laserstrahlen ihr Abstand in jeder Entfernung von der Rotationsachse gleich. Dieser Abstand wird aber in größerer Entfernung von der Achse schneller überstrichen, da der Laserabstand ja entfernt von der Achse einen kleineren Bruchteil des Umfanges ausmacht. Die Zeit, die der zweite Laser benötigt, um die Position zu erreichen, an der zuvor der erste Laser erfaßt wurde, sinkt damit, wenn der Abstand zur Achse wächst.

Dieses Meßprinzip ist allerdings weder ausschließlich auf Laserlicht beschränkt, noch auf lediglich zwei, noch auf exakt parallel ausgerichtete Strahlen. Vielmehr lassen sich auch mit geneigt zueinander emittierten, windschiefen oder sich schneidenden Strahlen Messungen durchführen; auch ist es möglich, eine nicht gleichmäßige Rotation vorzusehen, etwa, um nicht-interessierende Bereiche schneller zu überstreichen oder um bei fester Installation des Messsenders, z.B. in einer Industriehalle bestimmte Bereiche mit erhöhter Auflösung erfassen zu können.

Es ist möglich, eine Reihe von unterschiedlichen Strahlen zu verwenden, z.B. Ultraschallstrahlen. Es ist aber bevorzugt, wenn als Messstrahlen Lichtstrahlen ausgesandt werden, da dies die Kontrolle und Justierung der Vorrichtung besonders einfach gestaltet. Besonders bevorzugt ist die Verwendung von Laserlichtstrahlen, da Laserlichtquellen verfügbar sind, diese preiswert sind und mit nur geringer Divergenz emittieren.

Die Messsendestrahlen können auf verschiedene Weise zum Überstreichen einer Fläche gebracht werden. Besonders bevorzugt ist es, wenn sie um eine Achse rotieren. Hierzu können die Lichtquellen auf einem Drehtisch angeordnet werden oder sie strahlen auf eine sich drehende Optik. In einem solchen Fall werden sich die Messsendestrahlen nicht an der Rotationsachse schneiden; die Auswertung der Signale vereinfacht sich, wenn zumindest zwei der Messsendestrahlen allgemein parallel zueinander emittiert werden. Allerdings ist es problemfrei möglich, auf andere Strahlgeometrien zu korrigieren.

In einer besonders bevorzugten Variante werden mehr als zwei Messsendestrahlen emittiert. Die Messsendestrahlen können als allgemeiner Messsendestrahlfächer emittiert werden, wobei zumindest die durch einen Einzelfächer aufgespannte Ebene zumindest eine Komponente parallel zur Rotationsachse aufweist und bevorzugt allgemein parallel zu dieser liegt. Dies erlaubt die Verwendung von Detektoren im Meßempfänger, die nicht auf einer bestimmten Höhe angeordnet werden müssen, um ein Signal zu empfangen, auch wenn sie punktförmig ausgebildet sind. Obwohl auch eine fächerförmige Emission anderer Strahlen möglich ist, wird nachfolgend aus rein sprachlichen Gründen lediglich auf Lichtfächer Bezug genommen.

Es kann bevorzugt ein dritter Lichtfächer vorgesehen sein, der schräg zwischen zwei ihn umgebenden, allgemein rotationsachsparallelen Fächern verläuft. Die Zeit, die zwischen dem Durchgang der beiden allgemein rotationsachsparallelen Lichtfächer vergeht, hängt hier nur vom Abstand des Meßortes zur Rotationsachse ab. Abhängig von der Höhe, in welcher die Signale der drei Fächer empfangen werden, variiert dann sowohl die Zeit, die zwischen Durchgang des ersten, allgemein rotationsachsparallelen und dem schrägem Lichtfächer vergeht, als auch die Zeit, die zwischen dem Durchgang des schrägen Lichtfächers und des zweiten, allgemein rotationsachsparallelen Lichtfächers vergeht; wächst die erste Zeit, nimmt die zweite Zeit entsprechend ab, und umgekehrt. Aus der Zeitauswertung läßt sich somit auf die Höhe schließen.

Es ist besonders bevorzugt, wenn die Messanordnung ein Mittel zur Bestimmung eines Messstrahl-Nullwinkeldurchgangs aufweist. Dies erlaubt die Bezugnahme auf eine Nullwinkelreferenzachse, was unter Heranziehung des Abstandes zur Rotationsachse einen Satz Polarkoordinaten an jedem Meßpunkt bereitstellt.

Die Synchronisation auf den Nulldurchgang kann durch Modulation der Messstrahlen (z.B. Laserstrahlen) etwa mit einer Zeitinformation, durch Bezugnahme auf ein externes Zeitnormal wie ein DCF-Zeitsignal oder Netzbrummen und/oder Bezugnahme auf eine gemeinsame interne und/oder externe Zeit- beziehungsweise Taktreferenz geschehen.

Es kann auch ein Nullwinkelbezug unter einmaliger und/oder mehrfacher Synchronisation einer Empfängeruhr auf die Rotationsgeschwindigkeit der Lasereinheit und eine anschließende, kontinuierliche Zeitmessung generiert werden.

Es kann weiter eine insbesondere drahtlose Datenübertragungseinrichtung zum Austausch von Informationen zwischen den Einheiten vorgesehen sein, insbesondere der Zeitinformationen und/oder der Nullwinkeldurchgangsinformationen.

Es ist bevorzugt, wenn die Messanordnung weiter ein Mittel umfaßt, um aus dem Abstand zum Messsender (r) und der Bezugnahme auf den Messstrahl-Nullwinkeldurchgang (phi) kartesische Koordinaten (x, y) zu bestimmen. Die Umrechnung kann im Meßempfänger geschehen, um unmittelbar dort eine gegebene xy- und respektive z-Koordinate anzuzeigen.

Wenn die Zeitsignalauswertung zumindest teilweise im Messempfänger geschieht, ist es bevorzugt, wenn eine Vielzahl von Koordinaten darin speicherbar sind und/oder insbesondere auf eine Zentral- und/oder Datenweiterverarbeitungseinheit übertragen werden können. Der Messempfänger weist zwei beabstandete lichtempfindliche Elemente auf, welche Licht aus einem Lichtleiter empfangen, wobei dessen Oberfläche zur Einkopplung von auf die Mantelfläche auftreffendem Licht insbesondere durch Streuung ausgebildet sein kann.

Besonders bevorzugt ist es, wenn die lichtempfindlichen Elemente auf beiden Enden des Lichtleiters vorgesehen sind; dann erhält man wahlweise eine Redundanz und erhöhte Versagenssicherheit und/oder die Möglichkeit, aus einem Signalstärkenvergleich an erstem und zweiten Lichtsensor auf die Auftreffstelle eines in den Lichtleiter eingestreuten Lichtstrahles zu schliessen. Dies kann, bekannte Höhe der Empfänger über Grund vorausgesetzt, etwa bei Montage auf fahrbaren Robotern und/oder für Nivellierarbeiten am Bau zu Höhenbestimmungen verwendet werden.
In alternativer Weise ist es möglich, anstelle zweier oder mehrerer bewegter Messsendestrahlen, die in vorgegebener räumlicher Beziehung zueinander emittiert werden, einen Messempfänger mit integrierten mehreren, in festem Abstand zueinander stehenden Messsendestrahldetektoren zu verwenden, wobei gleichfalls aus dem Zeitverlauf der nun durch den wenigstens einen Messsendestrahl auf den unterschiedlichen Messsendestrahldetektoren erzeugten Signale auf einen Abstand zu einem Referenzpunkt geschlossen werden kann. Auch hier wird die Idee genutzt, daß eine gegebene Winkelgeschwindigkeit abhängig vom Abstand zur Rotationsachse zu mit dem Radius variierenden Überstreichzeiten führt. Es ist hierbei bevorzugt, wiederum stabförmige Lichtempfänger, z.B. Lichtdetektoren an Lichtleitern zu verwenden, in welche durch Einstreuung Licht eingekoppelt werden kann. zugleich werden bevorzugt wenigstens drei solcher Lichtleiter verwendet. Dies ermöglicht es, eine Schräghaltung des Meßempfängers zu erfassen und zu kompensieren. Eine Schräghaltung durch Verdrehen gegen die Tangente des überstrichenen Kreises kann dabei insbesondere dann angenommen werden, wenn die bei äquidistant angeordneten Messstrahldetektoren die Empfangszeitdifferenzen vom ersten zum zweitem Messstrahldetektor und von zweiten zum dritten signifikant voneinander abweichen. Eine Schräghaltung gegen die Rotationsachse kann hingegen erfaßt werden, wenn die einzelnen Messstrahldetektoren höhenempfindlich sind, z.B. durch positionsempfindliche Detektoren (PSDs) und/oder beidseits intensitätsabgetastete Lichtleiter, in welche Licht durch Streuung eingekoppelt werden kann. Es ist auch vorteilhaft, bei Verwendung von mehreren Messsendestrahlen zugleich mehrere, etwa zwei, Meßempfänger beabstandet voneinander vorzusehen; mit diesen kann bevorzugt die Orientierung eines Objektes, an dem sie angeordnet sind, im Raum bestimmt werden.

Die Erfindung wird im folgenden nur beispielsweise anhand der Zeichnungen beschrieben. In dieser zeigt/zeigen:
- Fig. 1: eine Skizze zur Veranschaulichung einer erfindungsgemäßen Messanordnung;
- Fig. 2 a: eine erste Prinzipskizze zur Veranschaulichung der Auswerteelektronik einer erfindungsgemäßen Messanordnung;

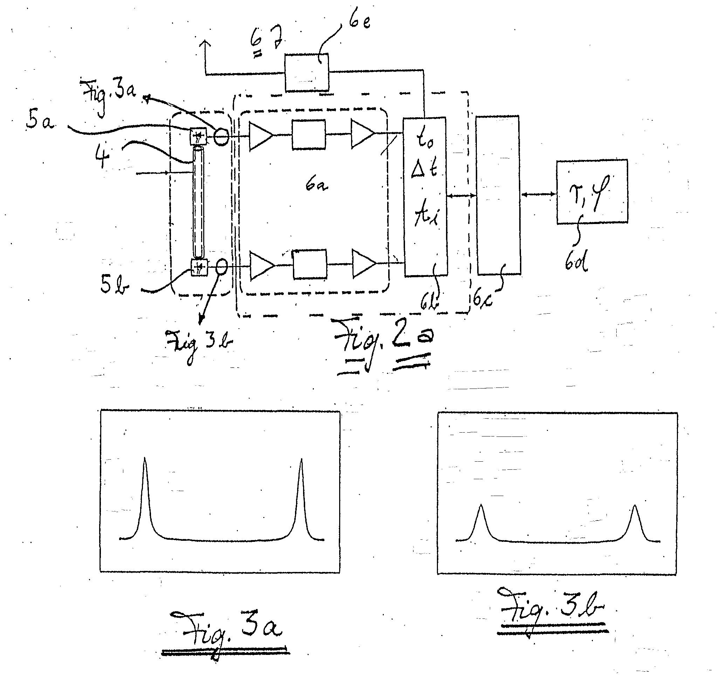

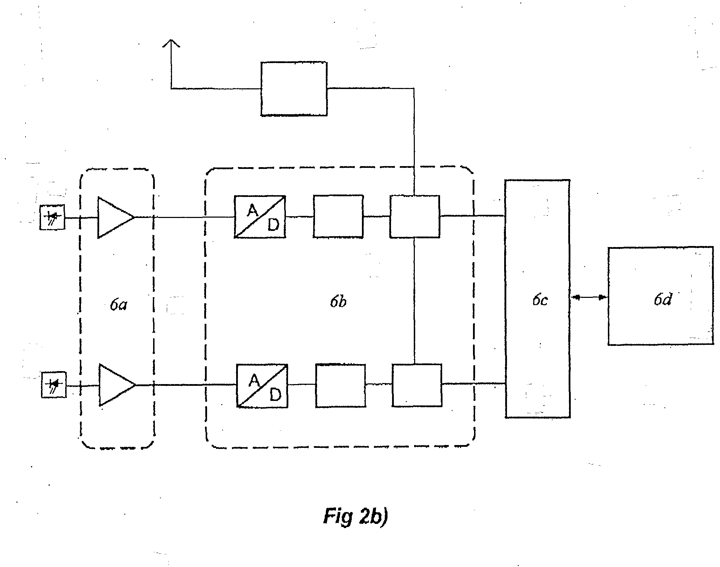

- Fig. 2 b: eine zweite Prinzipskizze zur Veranschaulichung mit einer alternativen Auswerteelektronik einer erfindungsgemäßen Messanordnung;
- Fig. 3a,b: Signale an den beiden Dioden des Messempfängers;

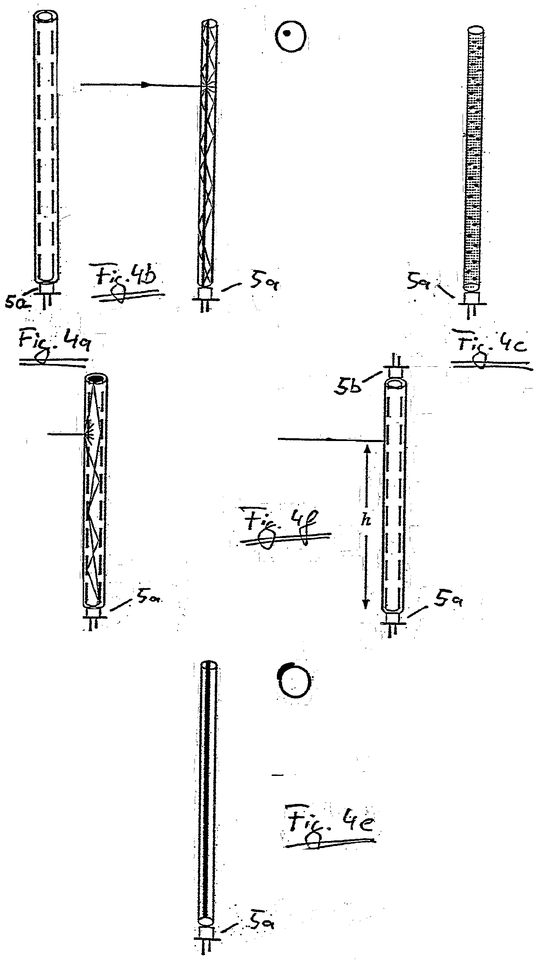

- Fig. 4: ein Detail eines Messempfängers;

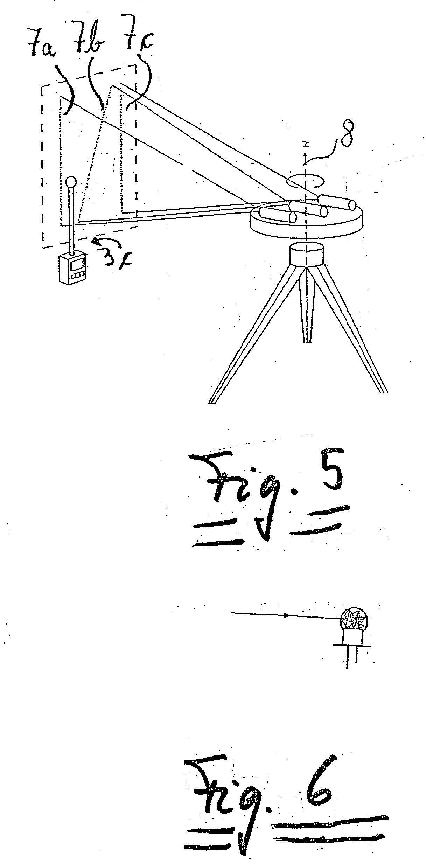

- Fig. 5: eine Prinzipskizze einer weiteren erfindungsgemäßen Messanordnung;
- Fig. 6: Details von Messempfängern;

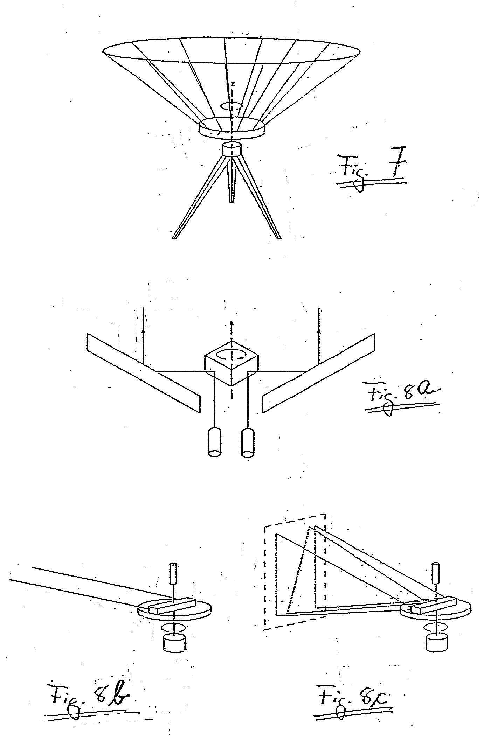

- Fig. 7: eine alternative Abstrahlgeometrie;
- Fig. 8: verschiedene Varianten zur erfindungsgemäßen Ausbildung des Messsenders;

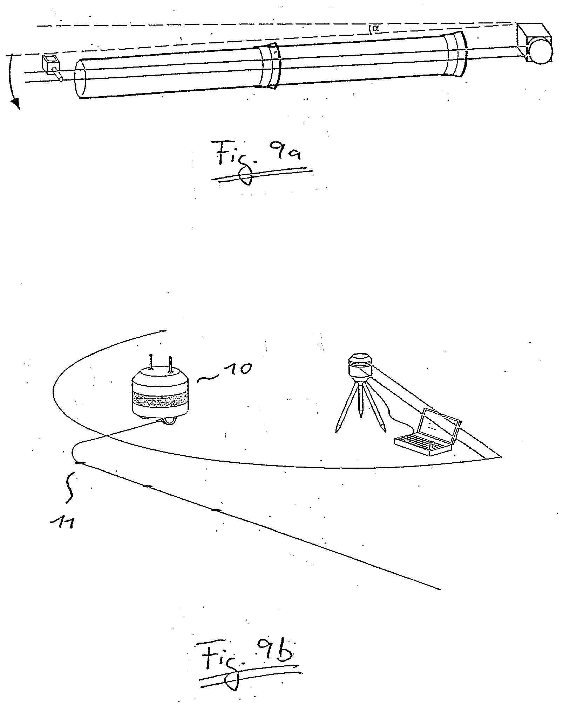

- Fig. 9: Beispiele für Anwendungen;

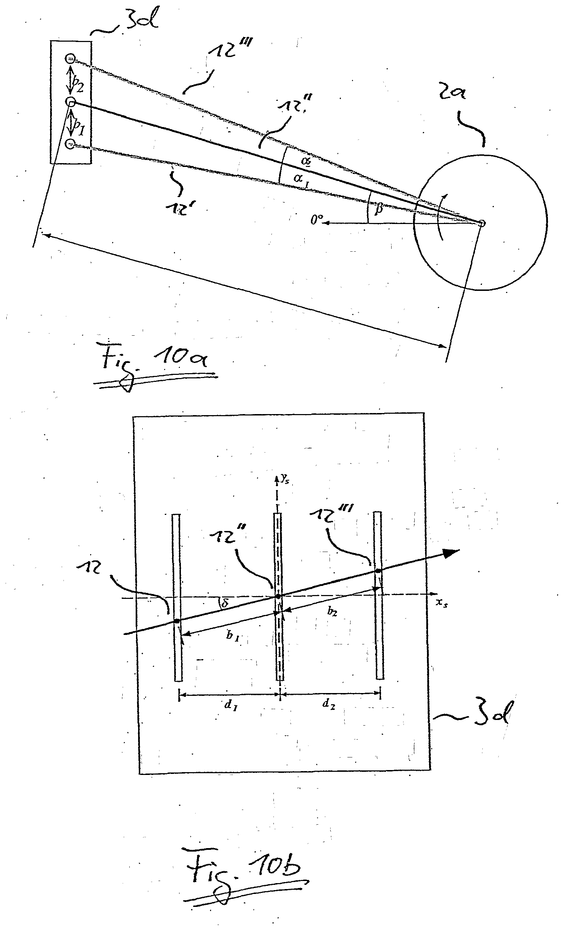

- Fig.10: eine weitere Variante.

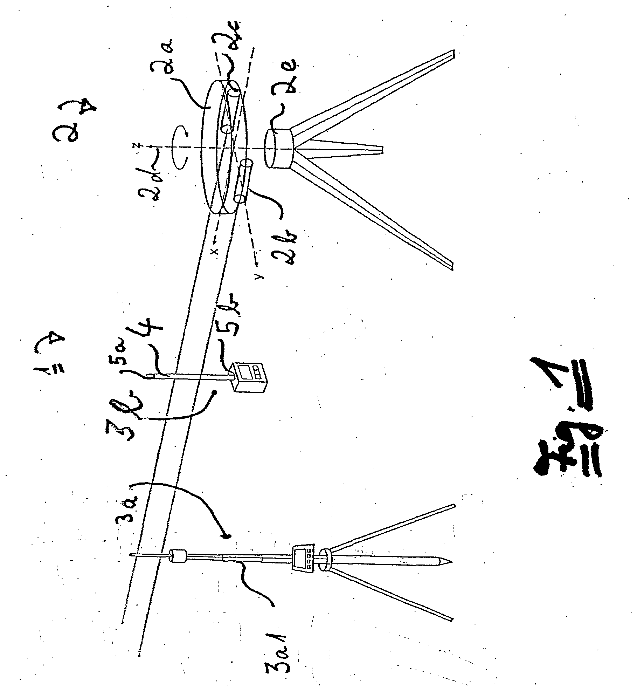

Nach Fig. 1 umfaßt eine allgemein mit 1 bezeichnete Messanordnung zur lokalen Positionsbestimmung einen Messsender 2 und mehrere messbar davon beabstandete Messempfänger 3a, 3b.

Der Messsender 2 umfaßt eine Plattform 2a, auf der zwei Laserlichtquellen 2b, 2c zur Emission von allgemein parallelen Messsendestrahlen angeordnet sind. Die Laser 2b, 2c sind gemeinsam mit der Plattform 2a durch einen Antrieb 2e mit geregelter, konstanter Geschwindigkeit um eine Rotationsachse 2d drehbar, die allgemein vertikal verläuft und senkrecht auf die allgemein parallelen Laserstrahlen steht.
Nicht dargestellt ist ein Funksignalgeber, der ein auf den Zeitpunkt t₀ eines Nullwinkeldurchgangs bezogenes Signal abstrahlt.

Der erste Meßempfänger 3a ist ein Standmeßempfänger, während der zweite dargestellte Meßempfänger 3b ein Handmeßempfänger ist. Prinzipiell ist es möglich, praktisch beliebig viele Empfänger gleichzeitig einzusetzen. Die beiden Meßempfänger 3a, 3b haben 360°-Charakteristiken, können also aus allen Richtungen Licht empfangen. Sie umfassen einen Lichtleiter 4, dessen Oberfläche mit einer streuenden Beschichtung versehen ist und an jedem Ende des Lichtleiters eine Photodiode 5a, 5b als lichtempfindliches Bauelement aufweist. Der Messempfänger 3 umfasst auch einen Funkempfänger (vgl. Fig. 2a), Bezugszahl 6e), der zum Empfang des vom Messsender abgestrahlten, auf den Nullwinkeldurchgang bezogenen Signals ausgebildet ist. Von den Photodioden 5a, 5b führen Signalleitungen zu einer Signalverarbeitungsschaltung 6 (Fig. 2a), die dazu ausgebildet ist, die Signale erst zu verstärken und so zu konditionieren, daß sich ein Zustand, in welchem ein Messsendestrahl in den Lichtleiter eingekoppelt wird, erkennen und hinsichtlich seiner zeitlichen Lage tᵢ relativ zum Zeitpunkt des Nullwinkeldurchgangs t₀ erfassen läßt. Die Signalverarbeitungsschaltung 6 ist weiter dazu ausgelegt, die Zeitdifferenz Δt (vgl. Fig. 3) von aufeinander folgenden Photodiodenpulsen zu bestimmen und daraus weitere Informationen herzuleiten (vgl. Zeitmeßeinrichtung 6b). Dazu ist eine Umrechnungsstufe 6c vorhanden, die dazu ausgebildet ist, aus der zeitlichen Lage tᵢ der jeweiligen Photodiodenimpulse eine Winkelkoordinate ϕ relativ zum Nullwinkeldurchgangszeitpunkt t₀ zu bestimmen und zur Ausgabestufe 6d auszugeben, und die weiter dazu ausgebildet ist, aus der Zeitdifferenz Δt eine Entfernung vom Messsender zu bestimmen. Die Ergebnisse aus der Umrechnungsstufe 6c werden an eine Ausgabestufe 6d gegeben, mit der das Ergebnis lokal auf einer Anzeige angezeigt werden kann.

Die Anordnung von Fig.1 wird benutzt wie folgt:
Zunächst wird der Antrieb 2e erregt, bis die gewünschte konstante Geschwindigkeit um die Rotationsachse 2d eingeregelt ist. Dann werden die Messender 2 erregt. Dies erzeugt Impulse in den Photodioden 5 des Messempfängers 3b, wenn diese von den Sendestrahlen getroffen werden. Diese zu den Impulsen gehörenden Signale werden verstärkt und konditioniert.

Nun wird mit dem Meßempfänger 3b die Zeitsignatur des Messsignalempfangs bestimmt. Es wird zunächst der zeitliche Abstand der erfaßten Signale bestimmt und daraus der Abstand zwischen Meßempfänger und Rotationsachse bestimmt.

Es wird hierzu ausgenutzt, daß ein Laserstrahl durch die gleichmäßige Rotation zunächst in jeder Entfernung zur Rotationsachse stets dieselbe Zeit benötigt, um einmal ganz umzulaufen, zugleich aber die Länge des Umfangskreises, den der Laser bei einem vollständigen Umlauf überstreicht, mit der Entfernung von der Rotationsachse wächst. Da bei paralleler Emission der Laserstrahlen ihr Abstand in jeder Entfernung von der Rotationsachse gleich ist, wird dieser Abstand aber in größerer Entfernung von der Achse schneller überstrichen, da der Laserabstand ja entfernt von der Achse einen kleineren Bruchteil des Umfanges ausmacht. Die Zeit, die der zweite Laser benötigt, um die Position zu erreichen, an der zuvor der erste Laser erfaßt wurde, sinkt damit, wenn der Abstand zur Achse wächst. Eine auf den reziproken Wert bezogene Größe ergibt daher einen den Abstand zur Rotationsachse charakterisierenden Wert.

Deshalb wird zunächst eine zum zeitlichen Abstand der erfaßten Signale reziproke Größe errechnet und dann unter Heranziehung einer, die geometrische Anordnung der emittierten Messsendestrahlen und der festen Rotationsfrequenz beschreibenden Größe der Abstand zur Rotationsachse bestimmt.

Die Zeitdifferenz Δt wird dabei zu einer Entfernung vom Messsender in einer Umrechnungsstufe 6c umgerechnet und an die Ausgabestufe 6d gegeben, die das Ergebnis lokal auf einer Anzeige anzeigt.

Aus der zeitlichen Lage tᵢ der jeweiligen Photodiodenimpulse wird dann die Winkelkoordinate ϕ relativ zum Nullwinkeldurchgangszeitpunkt t₀ bestimmt und bei 6d ausgegeben.

Es sei erwähnt, daß die Lichtleiter 4 am Messempfänger 3 auf unterschiedliche Weise für die Lichteinkopplung ausgebildet werden können. Dies ist in Fig. 4 dargestellt.

In Fig. 4a ist ein Lichtleiter abgebildet, dessen Oberfläche mit einer streuenden Beschichtung versehen ist und an dessen unteren Ende eine Photodiode vorgesehen ist.

Alternativ zeigt Fig. 4b die Verwendung einer Streuseele im Innern des Lichtleiters bzw. Hohlleiters. Der Strahlengang ist skizziert. Der in Fig. 4c dargestellte Lichtleiter verwendet Streupartikel zur Einstreuung des Laserlichts. Bei dem in Fig. 4d gezeigten Lichtleiter dient eine an einem Ende angebrachte Reflexionsschicht der Signalverstärkung insbesondere bei längeren Lichtleitern. Fig. 4e zeigt im Gegensatz zu Fig. 4a eine partiell flächendeckende Streuschicht. Hierbei wird das Licht bevorzugt von der der Streufläche gegenüberliegenden Seite durch den Lichtleiter hindurch eingekoppelt.

Fig. 4f zeigt den erfindungsgemäßen Lichtempfänger, der durch die Verwendung zweier Photodioden an beiden Enden des Lichtleiters eine Bestimmung der Lage des Auftreffpunktes der Laserstrahlen ermöglicht. Der Lichtempfänger nach Fig. 4f wird dabei für den Standmessempfänger 3a (vgl. Fig. 1) verwendet, da hierdurch in Verbindung mit der messbaren Auslenkung einer integrierten Teleskopmesslatte 3al, eine Höhenmessung (Nivellement) möglich ist.
Das Ausführungsbeispiel von Fig. 5 zeigt eine Weiterbildung der vorgehend beschriebenen Erfindung zur Bestimmung dreidimensionaler Koordinaten. Zunächst werden abweichend zum vorherigen Ausführungsbeispiel keine Lichtstrahlen emittiert, sondern Lichtfächer 7a, 7b, 7c. Die beiden Randfächer 7a, 7c liegen dabei allgemein parallel zueinander und zur Rotationsachse 8; der mittlere Lichtfächer ist gegen die beiden Lichtfächer 7a, 7c geneigt. Die Plattform ist wiederum mit einer Nullwinkelreferenz versehen, die bei jedem Überstreichen eines willkürlich festgelegten Nullwinkels ein zusätzliches Funk-Signal an den Messempfänger 3c ausgibt. Der Messempfänger 3c weist eine zumindest im wesentlichen punktförmige Lichteinkoppelfläche auf, vgl. Fig. 6.
Mit dieser Anordnung können dreidimensionale Koordinatenbestimmungen wie folgt durchgeführt werden: Zunächst wird wie zuvor die Zeitsignatur des Messsignalempfangs bestimmt und aus dem Abstand des Durchgangs der beiden äußeren Lichtfächer auf die Entfernung zur Rotationsachse geschlossen. Wie zuvor wird durch Bezugnahme auf das Feststellen des Überstreichens des Nullwinkeldurchgangs, wie gemäß Funk-Signal übertragen, die Winkelposition des Messempfängers 3c relativ zum willkürlichen Nullwinkel bestimmt. Ergänzend wird nun noch bestimmt, in welchem Verhältnis der Zeitraum zwischen dem Durchgang der beiden äußeren Lichtfächer durch den mittleren, schräg geneigten geteilt wird. Es ist unmittelbar einsichtig, daß dieses Verhältnis für die Höhe repräsentativ ist (bei gegebenem Radius), die als Koordinate z errechnet wird. Es wird so ein Satz Koordinaten r, phi, z bestimmt. Diese Zylinderkoordinaten werden dann in kartesische umgerechnet.

Während nach dem Beispiel von Fig. 1 die Laserstrahlen allgemein senkrecht zur Rotationsachse emittiert wurden, ist dies nicht zwingend erforderlich. Vielmehr ist es auch möglich, eine kegelförmige Emission anstelle einer ebenen zu wählen, wie in Fig. 7 gezeigt.

Während vorhergehend beschrieben wurde, daß die Laser selbst als Messsendestrahlquellen gedreht werden, ist dies nicht zwingend erforderlich. Vielmehr ist es auch denkbar, den Laserstrahl auf einen drehbaren Spiegel oder dergl. zu richten, vgl. Fig. 8a. Bei Drehung eines Polygons wandern zwar die Strahlen etwas auseinander, was bei der Auswertung kompensierbar ist, es lassen sich aber sehr hohe Geschwindigkeiten erzielen. Weiter ist es möglich, anstelle einer vollständigen Rotation von Lasern und/oder drehbaren optischen Elementen lediglich ein Überstreichen einer bestimmten Fläche, etwa durch periodisches Hin- und Herschwenken vorzusehen.

Es ist wie in Fig. 8b,c gezeigt auch möglich, einen einzigen Laserstrahl durch eine Strahlteileranordnung insbesondere auf der Plattform bei der Rotationsachse in mehrere Messsendestrahlen zu teilen.

Die Messanordnung kann beispielsweise in einer ihrer Ausgestaltungen eingesetzt werden bei autonomen mobilen Robotern, bei fahrerlosen Transportsystemen, bei Robotikanwendungen oder zur Maschinensteuerung, oder in der konstruktiven Vermessungstechnik und ersetzt und/oder ergänzt dort herkömmliche elektronische Maßbänder, wie Laser- oder Ultraschallentfernungsmesser, feststehende oder rotierende Nivellierlaser, insbesondere auch Nivellierlaser mit einstellbarer Neigung (z.B. Rotationslaser mit zwei Neigungsachsen, Kanalbaulaser), optische Nivellierinstrumente, insbesondere Digitalnivellierinstrumente, optische und/oder elektronische Theodolite und Totalstationen. Weiter ist es möglich, die erfindungsgemäße Meßanordnung einzusetzen zum Einmessen und Abstecken von Gebäudegrundrissen bei Neubauten (Erstellen von Schnurgerüsten, für Vermessungsarbeiten am Rohbau, beispielsweise zur Kontrolle der plangemäßen Bauausführung (Maßhaltigkeit) sowie zur Flächenberechnung, zum Aufmessen von bestehenden Gebäuden zur nachträglichen Flächenberechnung bzw. zur Überprüfung einzelner Maße eines Gebäudes, für manuelles Übertragen von Plandaten (insbesondere CAD-Daten) auf einen Untergrund (Boden, Wand, Decke) für Baugewerbe, Industrie, Landschaftsbau, Messebau, usw., Einmessen von Markierungen bei Sportveranstaltungen, Ausmessen erzielter Weiten bei Sportveranstaltungen beispielsweise in den Disziplinen Speerwurf, Hammerwurf, Kugelstoßen, Weitsprung, usw., Vermessung / Konstruktion von Fahrzeugen (Schiffen, Flugzeugen, etc.), Einsatz als Trackingsystem für Virtual Reality-Systeme, insbesondere auch für sogenannte virtuelle Studios, im Kanalbau, etwa zur Rohrverlegung (Fig. 9a).

Weiter ist es möglich, die Generierung von Umweltmodellen für mobile Robotikanwendungen zu unterstützen. Eine weitere Anwendung ist die Positionsbestimmung mobiler Serviceroboter. Insbesondere für alle Arten der flächendeckenden Bodenbearbeitung, beispielsweise Gebäudereinigung, Rasenpflege, Verlegung von Bodenfliesen, Minensuche (humanitarian demining), usw.

Eine besonders bevorzugte Variante sieht vor, daß ein mobiles System einerseits mit einer Meßanordnung und andererseits mit einem Markierungsgeber versehen ist, der bestimmte Positionen ansteuert und bei deren Erreichen Markierungen setzt, zum Beispiel um CAD-Gebäudepläne 1:1 zu übertragen, vergleiche Fig. 9b. Hierbei wird wiederholt die Ist-Position eines fahrbaren Roboters 10 bestimmt, es werden dann unter Berücksichtigung derselben Sollpositionen angefahren - und auf diese Markierungen 11 gesetzt wie erforderlich.

Es sei darauf hingewiesen, daß sich durch die Verwendung mehrerer Meßsender sowohl die Flächenabdeckung als auch die Messgenauigkeit erhöhen läßt. Weiter sei ausgeführt, daß ein Gesamtsystem aus einem oder mehreren Messsendern und einem oder mehreren Empfangsgeräten (Positionsdetektoren) bestehen kann, wobei nahezu beliebig viele Empfänger gleichzeitig eingesetzt und unabhängig voneinander betrieben werden können, solange die direkte Sichtverbindung zwischen der Scannereinheit und einem Empfänger für eine ausreichende Zahl von Strahlen, üblicherweise zwei, erhalten bleibt. Unabhängig von der einzelnen Anwendung kann dabei eine Vielzahl von Empfängern gleichzeitig bedient werden, so daß manuelles Vermessen durch mehrere Mitarbeiter oder die Steuerung mehrerer Maschinen gleichzeitig möglich werden, was in Industriehallen vorteilhaft ist, um fahrerlose Transportsysteme zu leiten. Hieraus resultiert ein erheblicher Zeitgewinn und eine erhebliche Kostenersparnis, weil gleichzeitig nur eine einzige Feststation benötigt wird und im Gegensatz zu dem Einsatz von Theodoliten lediglich die relativ preiswerten Empfänger mehrfach vorhanden sein müssen.

Die Formen der möglichen Empfangsgeräte reichen von einfachen x/y-Displays mit Einknopfbedienung bis hin zu komfortablen Messlatten mit integrierten Kleincomputern, sog. Personal Digital Assistant - PDAs, welche Softwareschnittstellen zu verbreiteten CAD-Programmen bieten.

Weil die Messgenauigkeit in größeren Entfernungen vor allem durch die zeitliche Auflösung der Messung des Abstands zwischen den Impulsen bestimmt wird, kann die Genauigkeit durch Mehrfachmessungen und anschließende Mittelwertbildung erhöht werden. Dies ist auch bei Luftturbulenzen usw., insbesondere für Messungen in großer Entfernung vom Messsender, vorteilhaft zur Messwertverbesserung.

Der Nullwinkeldurchgang kann von dem Empfänger anders als vorstehend beschrieben auch durch einmalige Synchronisation einer Empfängeruhr auf die Rotationsgeschwindigkeit der Lasereinheit und eine anschließende, kontinuierliche Zeitmessung generiert werden.

Es kann eine insbesondere drahtlose Datenübertragungseinrichtung zum Austausch von Informationen zwischen den Einheiten vorgesehen sein.

In den Empfängern können LCD-Anzeigen o.ä. vorgesehen sein, um die Position unmittelbar anzuzeigen.

Es sei darauf hingewiesen, daß die an den Meßempfängern vorgesehenen Lichtleiter, in welche durch Streuung Licht seitlich eingekoppelt wird und/oder bei welchen auf beiden Enden des Lichtleiters ein lichtempfindliches Element vorgesehen ist, auch unabhängig von der Verwendung der erfindungsgemäßen Anordnung Vorteile bieten. Diese Anordnung läßt sich insbesondere für die Höhenmessung anwenden, auch mit herkömmlichen Rotationslasern.

Eine weitere Variante der Meßanordnung ist in Figur 2b dargestellt. Bei dieser wird, zur besseren Bestimmung des Auftreffens des Laserstrahls auf den Meßempfänger das von der Photodiode erhaltene Signal nach Verstärkung durch einen Analog-/Digitalwandler zeit- und wertdiskret quantisiert und am erhaltenen digitalen Datenstrom der Schwerpunkt des bei Sendestrahldurchgang erhaltenen Signals algorithmisch bestimmt, um den Strahldurchtritt auf diesen Schwerpunktsdurchtritt festzulegen. Indem der Durchtritt des Schwerpunktes als Strahldurchtrittszeitpunkt festgelegt wird, kann die zeitliche Präzision der Bestimmung erhöht werden; insbesondere ist eine Präzision besser als durch die Abtastrate vorgegeben möglich.

Es ist weiter die dargestellte Variante dazu angeordnet, am digitalen Datenstrom eine digitale Signalkonditionierung z.B. in Form einer Offsetanpassung und/oder unter Verwendung einer Bewertungs- (Gewichtungs-) -funktion, z.B. einer Randlagenabschwächung vorzunehmen, um eine noch weiter verbesserte Erfassung des zeitlichen Strahldurchgangs zu erhalten. Es sei darauf hingewiesen, daß es zur Messung bei geringen Signalpegeln möglich ist, eine Laserstrahlmodulation am Meßsender vorzunehmen. Falls gewünscht, kann die erforderliche Demodulation im Empfänger, hinreichend hohe Abtastraten bei der Quantisierung vorausgesetzt, in einer digitalen Demodulationseinheit erfolgen.

Eine Erfindungsvariante mit nur einem Strahl wird mit Bezug auf Fig. 10. beschreiben.

Die in Fig. 10a gezeigte Messanordnung erlaubt dabei eine zweidimensionale Positionsbestimmung mit einem einzigen Messstrahl. Der von dem Messsender senkrecht zu dessen Drehachse emittierte, gerichtete Messsendestrahl überstreicht im Laufe einer Umdrehung einen Messempfänger 3d, der mit drei Stabsensoren nach Fig. 4f ausgestattet ist. Die Stabsensoren stehen parallel zur Rotationsachse. Der Meßsendestrahl ist hierbei kollimiert und nicht fächerförmig aufgeweitet.

Als Rohdaten fallen zunächst aus der Zeitsignatur des Signalempfangs die Winkel beta, alphal und alpha2 an, wobei alphal und alpha2 durch Messung der Zeitabstände zwischen den Impulsen der Messstrahldetektoren bestimmt werden und beta durch Bestimmung der Zeitdifferenz zwischen dem Mess-Impuls an einem Detektor (bevorzugt des mittleren) und dem Nullwinkel-Referenzsignal.

Auf eine nicht parallele Haltung des Messempfängers zur Rotationsachse kann gemäß Fig. 10b kompensiert werden. Fig. 10b zeigt die Draufsicht auf die aktive Seite des Messstrahlempfängers 3d. Dabei sind die drei Messstrahldetektoren parallel und mit den Abständen d1 und d2 in einer Ebene angeordnet.

Der Strahl überquert den Messstrahlempfänger auf einer um den Winkel delta verkippten Bahn, so daß der Auftreffpunkt jeden Lichtleiter in unterschiedlichem Verhältnis teilt. Um nun die Auftreffpunkte des Messstrahls im lokalen Koordinatensystem (xs,ys) des Messempfängers bestimmen zu können, muß diese eindimensionale Höheninformation der Stabsensoren ausgewertet werden. Dies kann durch Auswertung der Signalstärken an den beiden endseitigen Photodioden jedes Lichtleiters geschehen. Da die Abstände dl, d2 bekannt sind, können nun die für die Bestimmung des Abstandes r benötigten Basisabstände b1 und b2 errechnet werden. Aus alphal und alpha2 und den Basisabständen kann so der Abstand r berechnet werden.

Anstelle der Lichtleiterkonfiguration sind auch andere Sensoren, wie z.B. PSDs einsetzbar.

Eine Meßanordnung gemäß Figur 10 erlaubt generell neben der Bestimmung des Abstandes r und des Winkels beta auch eine Höhenmessung in Bezug auf die durch die rotierenden Meßstrahlen aufgespannte Ebene im Erfassungsbereich der Lichtleiter/PSDs.

Weiter ist es möglich, auch die Bestimmung des Polarkoordinatenwinkels beta vorzunehmen ohne auf die Übertragung einer Winkelreferenz Bezug zu nehmen; dabei kann dennoch die exakte Position des Meßempfängers relativ zu einem Meßsender bestimmt werden, und zwar in wenigstens zwei Koordinaten (r, phi). Dazu wird ein Meßsender mit nahezu konstanter Drehzahl verwendet, bei dem es sich auch beispielsweise um einen preiswerten, per se bekannten rotierender Nivellierlaser handeln kann. Es wird zunächst mit dem in Figur 10 gezeigten Meßsender an einer ersten Stelle eine Messung ausgeführt. Dann wird der Meßsender um eine bekannte Strecke versetzt und eine neuerliche Messung mit dem Meßempfänger an derselben Stelle durchgeführt. Die bekannte Strecke muß nur hinsichtlich ihrer Länge bekannt sein, was ohne weiteres aus der Zeitsignatur am Meßempfänger, der auf den vorherigen oder gewünschten zweiten Ort des Meßsenders versetzt wird, erfaßt werden kann. Die Bestimmung der Polarkoordinaten erfolgt dann durch per se bekannte Trilateration. Vor dem Versetzen des Meßsender können unter Speicherung der Einzelmeßwerte Messungen an mehreren Stellen durchgeführt werden, wobei für diese die Messungen nach Versetzen des Meßsenders wiederholt werden, um so die Positionen der Meßstellen insgesamt bestimmen zu können.

In alternativer Weise ist es möglich, von vornherein zwei Meßsender einzusetzen. Dies ist insbesondere dann möglich, wenn beide Meßsender am Empfänger unterschieden werden können. Dies kann durch unterschiedliche Rotationsfrequenzen, Codierung der emittierten Signale, Wahl eines geeigneten Emmisionsspektrums und dergleichen erfolgen. Der Abstand beider Meßsender, die willkürlich zueinander aufgestellt werden, wird dann ermittelt, indem beispielsweise auf der Verbindungslinie zwischen den Meßsendern eine Messung mit dem Meßempfänger vorgenommen wird.

In einer besonders bevorzugten Variante sind im Meßempfänger Inertialsensoren, das heißt Trägheitssensoren vorgesehen, mit denen eine Bewegung des Meßempfängers erfaßt werden kann. Hintergrund ist insbesondere, daß, insbesondere bei Messungen im Freien über weite Strecken, etwa aufgrund der Luftturbulenzen refraktionsbedingte Meßungenauigkeiten von Messung zu Messung auftreten können. Wenn erfaßt wird, ob und/oder wieweit sich der Messempfänger zwischen zwei Messungen bewegt hat, ist es möglich, eine meßgenauigkeitserhöhende Mittelung vorzunehmen. Dies kann auch unter Berücksichtigung unter Bewegung aufgenommener Meßwerte geschehen. Werden Meßwerte gespeichert, die während der Bewegung an dem Meßort erfaßt wurden, so kann unter Auswertung der mit den Trägheitssensoren oder dergleichen bestimmten Trajektorien die Meßgenauigkeit durch Berücksichtigung von Werten, die während der Bewegung um den oder zum Meßpunkt erfaßt wurden, erhöht werden. Anstelle der Inertialsensoren können andere Bewegungssensoren zur Erfassung von Bewegungen, Ausrichtung und/oder Beschleunigung vorgesehen sein. Es ist einsichtig, daß bei Vorsehen derartiger Sensoren auch auf die Bewegung des Meßempfängers während einer Messung kompensiert werden kann.

## Patentansprüche

1. Messanordnung, umfassend mindestens einen Messsender (2), der dazu ausgebildet ist, zumindest einen, einen Bereich überstreichenden Messstrahl zu emittieren, und einen davon beabstandeten Messempfänger (3; 3a; 3b) mit wenigstens einem Lichtleiter (4) mit zwei daran angeordneten, beabstandeten lichtempfindlichen Elementen (5; 5a, 5b), um den mindestens einen Messstrahl zu empfangen, und
eine Auswerteeinheit, die dazu ausgebildet ist, das Auftreffen des mindesten einen Messstrahls zeit- und wertdiskret derart aufzulösen, dass mehr als zwei Amplituden-Quantisierungsstufen unterscheidbar sind, und aus den quantisierten Messsignalen auf den jeweils zugehörigen Strahldurchgangszeitpunkt zu schließen, um aus den Strahldurchgangszeitpunkten des besagten Messstrahls an mindestens zwei der besagten Lichtleiter, oder aus den Strahldurchgangszeitpunkten von mindesten zwei der besagten Messstrahlen an dem besagten Lichtleiter eine Entfernung und/oder Position des Messempfängers zu bestimmen.

2. Messanordnung nach dem vorhergehenden Anspruch, **dadurch gekennzeichnet, dass** der Lichtleiter lichtstreuend, insbesondere mit einer lichtstreuenden Oberfläche gebildet ist.

3. Messanordnung nach einem der vorhergehenden Ansprüche, **dadurch gekennzeichnet, dass** ein Streumittel zur Einkopplung der Messsendestrahlen eine Streufläche, Beschichtung, Umhüllung oder Aufrauung einer Grenzfläche des Lichtleiter umfasst.

4. Messanordnung nach einem der vorhergehenden Ansprüche, **dadurch gekennzeichnet, dass** der Lichtleiter zur seitlichen Einkopplung von Licht ausgebildet ist.

5. Messanordnung nach einem der vorhergehenden Ansprüche, **dadurch gekennzeichnet, dass** die lichtempfindlichen Elemente an den Lichtleiterenden angeordnet sind.

6. Messanordnung nach einem der vorhergehenden Ansprüche, **dadurch gekennzeichnet, dass** der Lichtleiter ein Rundstab ist und die lichtempfindlichen Elemente an seinen Stirnflächen angeordnet sind.

7. Messanordnung nach einem der vorhergehenden Ansprüche, **dadurch gekennzeichnet, dass** die Auswerteeinheit zur Zeit-und Amplitudendiskretisierung wenigstens einen Analog-/Digitalwandler aufweist.

8. Messanordnung nach dem vorhergehenden Anspruch, **dadurch gekennzeichnet, dass** ein Mittel vorgesehen ist, um aus dem zeit-und wertdiskret aufgelösten Messstrahlempfangssignal auf den zeitlichen Schwerpunkt des Strahlendurchgangs zu schließen.

9. Messanordnung nach einem der vorhergehenden Ansprüche, **dadurch gekennzeichnet, dass** eine Signalstärkeauswerteschaltung vorgesehen ist, um aus dem Signalverhältnissen an den lichtempfindlichen Elementen auf die Lage, Höhe, des Auftreffpunktes zu schließen.

10. Messanordnung nach einem der vorhergehenden Ansprüche, **dadurch gekennzeichnet, dass** der Messempfänger ein Mittel zur Bestimmung der Ausrichtung des Messempfängers zu einer Referenzebene aufweist, insbesondere der Rotationsebene des Messsender.

11. Messanordnung nach dem vorhergehenden Anspruch, **dadurch gekennzeichnet, dass** der Messempfänger mit einem Mittel zur Bestimmung von Richtung und Entfernung des Messempfängers relativ zu einem vorgegebenen Sollpunkt vorgesehen ist.

12. Messanordnung nach einem der beiden vorhergehenden Ansprüche, **dadurch gekennzeichnet, dass** ein Mittel vorgesehen ist, um aus der gemessenen Position der lichtempfindlichen Elemente und deren Lage innerhalb des Messempfängers auf die Position eines ausgezeichneten Punktes, der sich in fester räumlicher Beziehung zum Messempfänger befindet, zu schließen.

13. Messanordnung nach dem vorhergehenden Anspruch, **dadurch gekennzeichnet, dass** ein Mittel zum Antasten und/oder Markieren eines Mess-/Zielpunktes am Messempfänger als ausgezeichneter Punkt Ausgebildet ist, insbesondere eine Antastspitze.

14. Messanordnung nach einem der vorhergehenden Ansprüche, **dadurch gekennzeichnet, dass** der Messempfänger Inertialsensoren zur quasi-kontinuierlichen Positionsbestimmung enthält und/oder ein Mittel zur Kompensation auf eine Schräghaltung enthält.

15. Messanordnung nach einem der vorhergehenden Ansprüche, **dadurch gekennzeichnet, dass** ein Mittel zur Speicherung einer Vielzahl sukzessiver aufgenommener Koordinaten vorgesehen ist.

16. Messempfänger, mit wenigstens einem Lichtleiter (4) mit zwei daran angeordneten, beabstandeten lichtempfindlichen Elementen (5; 5a; 5b), um mindestens einen von einem Messsender (2) ausgesendeten Messstrahl zu empfangen, und einer Auswerteeinheit, die dazu ausgebildet ist, das Auftreffen des mindestens einen Messstrahls zeit- und wertdiskret derart aufzulösen, dass mehr als zwei Amplituden-Quantisierungsstufen unterscheidbar sind, und aus den quantisierten Messsignalen auf den jeweils zugehörigen Strahldurchgangszeitpunkt zu schließen, um aus den Strahldurchgangszeitpunkten des besagten Messstrahls an mindestens zwei der besagten Lichtleiter, oder aus den Strahldurchgangszeitpunkten von mindesten zwei der besagten Messstrahlen an dem besagten Lichtleiter eine Entfernung und/oder Position des Messempfängers zu bestimmen.

## Claims

1. A measuring device comprising
at least one measurement transmitter (2) which is designed to emit at least one measuring beam scanning a region, and
a measurement receiver (3; 3a; 3b) spaced apart from said measurement transmitter, comprising at least one light conductor (4) having two light-sensitive elements (5; 5a, 5b) spaced apart from one another and disposed on said measurement receiver in order to receive at least one measuring beam, and
an evaluation unit which is designed to resolve the incidence of the at least one measuring beam time- and value-discretely such that a distinction can be made between more than two amplitude quantisation stages, and to conclude the respectively corresponding beam passage time from the quantised measurement signals in order to determine a distance and/or a position of the measurement receiver from the beam passage times of said measuring beam on at least two of said light conductors or from the beam passage times of at least two of said measuring beams on said light conductor.

2. The measuring device according to the preceding claim, **characterised in that** the light conductor is formed so as to scatter light, in particular with a light-scattering surface.

3. The measuring device according to any of the preceding claims, **characterised in that** a dispersing means for coupling the measurement transmitting beams comprises a dispersing area, a coating, a casing or a roughening of a boundary surface of the light conductor.

4. The measuring device according to any of the preceding claims, **characterised in that** the light conductor is designed for the lateral coupling of light.

5. The measuring device according to any of the preceding claims, **characterised in that** the light-sensitive elements are disposed on the light conductor ends.

6. The measuring device according to any of the preceding claims, **characterised in that** the light conductor is a round rod and the light-sensitive elements are disposed on its front faces.

7. The measuring device according to any of the preceding claims, **characterised in that** the evaluation unit has at least one analogue/digital converter for the time and amplitude discretisation.

8. The measuring device according to any of the preceding claims, **characterised in that** a means is provided for concluding the temporal centre of gravity of the beam passage from the time- and value-discretely resolved measurement beam reception signal.

9. The measuring device according to any of the preceding claims, **characterised in that** a signal strength evaluation circuit is provided in order to conclude the position and the height of the point of incidence from the signal conditions on the light-sensitive elements.

10. The measuring device according to any of the preceding claims, **characterised in that** the measurement receiver has a means for determining the alignment of the measurement receiver relative to a reference plane, in particular to the rotational plane of the measurement transmitter.

11. The measuring device according to the preceding claim, **characterised in that** the measurement receiver is provided with a means for determining the direction and the distance of the measurement receiver relative to a predetermined target point.

12. The measuring device according to either of the two preceding claims, **characterised in that** a means is provided for concluding the position of a marked point that is in a fixed spatial relationship to the measurement receiver from the measured position of the light-sensitive elements and their position within the measurement receiver.

13. The measuring device according to the preceding claim, **characterised in that** a means for sampling and/or marking a measuring/target point on the measurement receiver is designed as a marked point, in particular a sampling peak.

14. The measuring device according to any of the preceding claims, **characterised in that** the measurement receiver contains inertial sensors for almost continuously determining position and/or a means for compensation of a tilt.

15. The measuring device according to any of the preceding claims, **characterised in that** a means is provided for storing a plurality of successive recorded coordinates.

16. A measurement receiver, comprising at least one light conductor (4) having two light-sensitive elements (5; 5a; 5b) spaced apart from one another and disposed on said light conductor in order to receive at least one measuring beam emitted by a measurement transmitter (2), and
an evaluation unit which is designed to resolve the incidence of the at least one measuring beam time- and value-discretely, such that a distinction can be made between more than two amplitude quantisation steps and to conclude the respectively corresponding beam passage time from the quantised measurement signals in order to determine a distance and/or a position of the measurement receiver from the beam passage times of said measuring beam on at least two of said light conductors or from the beam passage times of at least two of said measuring beams on said light conductor.

## Revendications

1. Dispositif de mesure, comprenant
au moins un émetteur de mesure (2) qui est conçu pour émettre au moins un rayon de mesure balayant une zone, et
un récepteur de mesure (3 ; 3a ; 3b) distant de celui-ci, avec au moins un conducteur optique (4) avec deux éléments photosensibles (5 ; 5a, 5b) espacés, disposés au niveau de celui-ci, pour recevoir l'au moins un rayon de mesure, et
une unité d'évaluation qui est conçue pour résoudre l'apparition de l'au moins un rayon de mesure d'une manière discrète en temps et en valeur, de manière que plus de deux niveaux de quantification d'amplitude puissent être différenciés et pour déduire, à partir des signaux de mesure quantifiés, l'instant de passage de rayon respectif associé afin de déterminer, à partir des instants de passage de rayon dudit rayon de mesure au niveau d'au moins deux desdits conducteurs optiques, ou à partir des instants de passage de rayon d'au moins deux desdits rayons de mesure au niveau dudit conducteur optique, une distance et/ou une position du récepteur de mesure.

2. Dispositif de mesure selon la revendication précédente, **caractérisé en ce que** le conducteur optique est formé d'une manière diffusant la lumière, en particulier avec une surface diffusant la lumière.

3. Dispositif de mesure selon l'une quelconque des revendications précédentes, **caractérisé en ce qu'**un moyen de diffusion pour le couplage des rayons d'émission de mesure comprend une surface de diffusion, un revêtement, une enveloppe ou un garnissage d'une surface limite du conducteur optique.

4. Dispositif de mesure selon l'une quelconque des revendications précédentes, **caractérisé en ce que** le conducteur optique est conçu pour le couplage latéral de la lumière.

5. Dispositif de mesure selon l'une quelconque des revendications précédentes, **caractérisé en ce que** les éléments photosensibles sont disposés au niveau des extrémités du conducteur optique.

6. Dispositif de mesure selon l'une quelconque des revendications précédentes, **caractérisé en ce que** le conducteur optique est une barre ronde et les éléments photosensibles sont disposés au niveau de ses faces frontales.

7. Dispositif de mesure selon l'une quelconque des revendications précédentes, **caractérisé en ce que** l'unité d'évaluation présente, pour la discrétisation en temps et amplitude, au moins un convertisseur analogique / numérique.

8. Dispositif de mesure selon la revendication précédente, **caractérisé en ce qu'**il est prévu un moyen pour déduire, à partir du signal de réception du rayon de mesure résolu de manière discrète en temps et en valeur, le barycentre temporel du passage de rayon.

9. Dispositif de mesure selon l'une quelconque des revendications précédentes, **caractérisé en ce qu'**il est prévu un circuit d'évaluation d'intensité de signal pour déduire, à partir des rapports de signaux au niveau des éléments photosensibles, l'emplacement, la hauteur, du point d'apparition.

10. Dispositif de mesure selon l'une quelconque des revendications précédentes, **caractérisé en ce que** le récepteur de mesure présente un moyen pour déterminer l'orientation du récepteur de mesure par rapport à un plan de référence, en particulier à un plan de rotation de l'émetteur de mesure.

11. Dispositif de mesure selon la revendication précédente, **caractérisé en ce que** le récepteur de mesure est prévu avec un moyen pour déterminer la direction et la distance du récepteur de mesure relativement à un point théorique prédéfini.

12. Dispositif de mesure selon l'une quelconque des deux revendications précédentes, **caractérisé en ce qu'**il est prévu un moyen pour déduire, à partir de la position mesurée des éléments photosensibles et de leur emplacement à l'intérieur du récepteur de mesure, la position d'un point repéré qui a une relation spatiale fixe avec le récepteur de mesure.

13. Dispositif de mesure selon la revendication précédente, **caractérisé en ce qu'**un moyen de palpage et/ou de marquage d'un point de mesure/cible est conçu au niveau du récepteur de mesure en tant que point repéré, en particulier une pointe de palpage.

14. Dispositif de mesure selon l'une quelconque des revendications précédentes, **caractérisé en ce que** le récepteur de mesure contient des capteurs d'inertie pour la détermination de position quasi continuelle et/ou contient un moyen pour la compensation d'une posture inclinée.

15. Dispositif de mesure selon l'une quelconque des revendications précédentes, **caractérisé en ce qu'**il est prévu un moyen pour le stockage d'une pluralité de coordonnées enregistrées successives.

16. Récepteur de mesure, avec
au moins un conducteur optique (4) avec deux éléments photosensibles (5 ; 5a ; 5b) espacés, disposés au niveau de celui-ci, pour recevoir au moins un rayon de mesure émis par un émetteur de mesure (2), et
une unité d'évaluation qui est conçue pour résoudre l'apparition de l'au moins un rayon de mesure d'une manière discrète en temps et en valeur, de manière que plus de deux niveaux de quantification d'amplitude puissent être différenciés et pour déduire, à partir des signaux de mesure quantifiés, l'instant de passage de rayon respectif associé afin de déterminer, à partir des instants de passage de rayon dudit rayon de mesure au niveau d'au moins deux desdits conducteurs optiques, ou à partir des instants de passage de rayon d'au moins deux desdits rayons de mesure au niveau dudit conducteur optique, une distance et/ou une position du récepteur de mesure.
